# EUROPEAN PATENT SPECIFICATION

(11) **EP 1 414 169 B1**
(45) Date of publication and mention of the grant of the patent: **28.04.2010**
(21) Application number: 03090357.9
(22) Date of filing: 21.10.2003
(51) Int. Cl.: H04B 7/26

(54) **CDMA data communication system, terminal device and method with reduced power consumption**
CDMA-Datenkommunikationssystem, Endgerät und Verfahren mit reduziertem Leistungsverbrauch
Système de communication de données, terminal et procédé avec consommation de puissance réduite

(30) Priority: 21.10.2002 JP 2002305899
(43) Date of publication of application: 28.04.2004
(73) Proprietor: NEC CORPORATION, Tokyo (JP)
(72) Inventor: Toda, Yasushi, c/o NEC Corporation, Tokyo (JP)
(74) Representative: Wenzel & Kalkoff

(56) References cited:
- WO-A-00/28760
- WO-A-02/49337
- JP-A- 2002 247 127

## Description

### BACKGROUND OF THE INVENTION

The present invention relates to data communication terminal devices and data communication methods based on portable data communication terminals or the like as well as programs for the same.

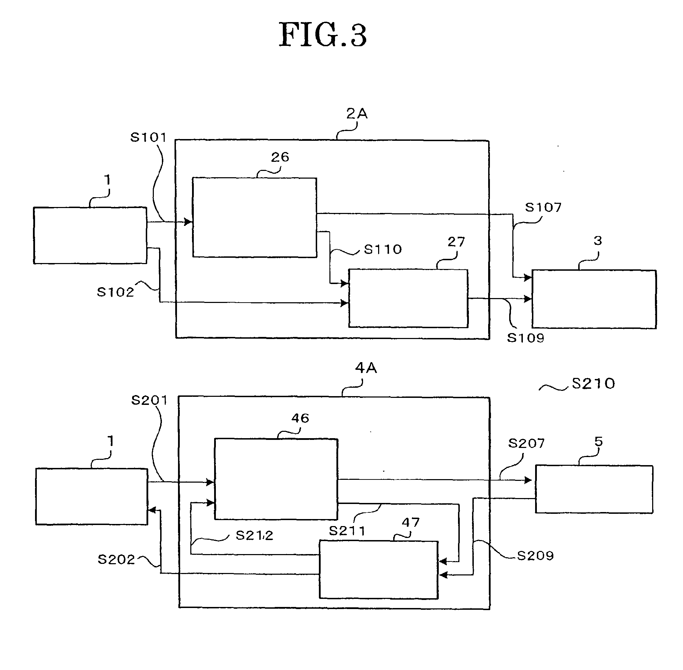

Fig. 3 shows a relevant prior art arrangement in which a spread spectrum transfer system is used as digital signal transmission system in connection with CDMA (Code Division Multiple Access). In the spread spectrum transfer system, a plurality of spread codes or so-called PN spread signals are used for communication channel formation. These spread codes are the same as those used in a spread process carried out on the transmitting side, and are used in an inverse spread process on received wave. Thus, it is possible to take out desired data from the received wave which contains interference waves.

In a data terminal having a communication function based on the above system, a coding and a decoding means 2A and 4A require different process parameters depending on the sizes of transmitted and received data. Accordingly, in the coding means 2A a coding parameter process unit 26 calculates a coding process parameter S 110 and a transmitting process parameter S 107 on the basis of a transmission parameter S101 preset by an upper rank controller 1 by using a transport format of transmitted data S102, and a coding process unit 27 processes the transmitted data S 102 by using the coding process data S110 to form coded/multiplexed data and sends out the same data to a transmitting unit 3. In the decoding means 4A, on the other hand, a decoding process unit 47 obtains TFCI (Transport Format Combination Indicator) data S212 from prior-to-decoding data S209 received in a receiving means 5, and a decoding parameter process unit 46 calculates a decoding process parameter S211 and a receiving process parameter S207 by using the data S212 and a reception parameter S201 preset by the upper rank controller 1. Decoding process unit 4A obtains decoded received data S202 from the prior-to-decoding data S209 by using decoding process parameter S211, and feeds the obtained data to the upper controller 1.

The coding and decoding means 2A and 4A set the process parameters S 110 and S211 in coding and decoding process units 27 and 47 respectively for processes therein, thus effecting coding of transmitted data and decoding of received data, respectively.

The transmitted and received data are roughly classified into those of discrete control channel (DCCH) and those of discrete traffic channel (DTCH), and data presence/absence check and data size updating are made independently for these channels. This means that the transport format combination indicator (TFCI) updating is done frequently even with constant data transmission/reception data rate. The frequent updating dictates frequent re-calculation of the process parameters S110 and S217 in the coding and decoding parameter process units 26 and 46. In this case, the same calculation parameters are calculated, giving rise to wasteful calculation process, which is undesired in view of the consumed power required for the calculation.

It is conceivable to store all of the process parameters S110 and S211 and the transmission and receiving process parameters S107 and S207 in a non-volatile memory in the portable data terminal. However, the number of transport format combinations of services is huge, and calculation parameters to be reserved are immense and require a bulky scale memory. Also, when a physical channel parameter is updated in data transmission or reception, the coding process parameter S 110 has to be re-calculated. Since physical channel parameters are frequently updated in the network, re-calculation often becomes necessary. Therefore, in the method in which necessary transmission and reception parameters are all stored in a non-volatile memory, the portable data terminal of this type causes problems relating to consumed power, size reduction and cost.

A channel coding and decoding system also has been proposed, which permits reducing power consumed in the above parameter calculation processes. This system is arranged such that when the transport format combination indicator (TFCI) in the present transport time interval (TTI) is the same as the transport format combination indicator (TFCI) in the immediately preceding time interval (TTI), the consumed power required for the parameter calculation process of channel decoding and rate de-matching with respect to received data and also for the parameter calculation process channel coding and rate matching with respect to transmitted data, is reduced by stopping these parameter calculation processes and using parameter values obtained in the preceding calculation (see Literature 1: Japanese Patent Laid-open No. 2002-247127, for instance).

This prior art proposal, however, is predicated on a mere notice as to whether the transport format combination indicators (TFCI) in the present and immediately preceding transport time intervals (TTI) are the same. This means, for instance, that when the same state occurs in two or three successive transport time intervals (TTI), the parameter calculation processes become necessary for every interval (TTI). Therefore, it is difficult to reduce consumed power required for the calculation processes by reducing the number of times the parameter calculation processes become necessary.

From JP 2002 247127, a memory unit of a communication terminal device is known in which process parameters are stored and are not updated when the values remain the same.

### SUMMARY OF THE INVENTION

The invention provides the terminal devices according to claims 1 and 2 as well as communication methods according to claims 18 and 19, respectively.

Other objects and features will become apparent from the following description with reference to the attached drawings.

### BRIEF DESCRIPTION OF THE DRAWINGS

Fig. 1 is a block diagram showing an embodiment of the data communication terminal device according to the invention;
Fig. 2 is a block diagram showing another embodiment of the data communication terminal device; and
Fig. 3 shows an arrangement example of a coding means and a decoding means in a prior art portable data terminal.

### PREFERRED EMBODIMENTS OF THE INVENTION

Preferred embodiments of the invention will now be described with reference to the drawings.

Features of the invention will first be summarized from the method invention standpoint. These feature methods are made to be programs, which are for carrying out these method and can be stored in the data recording medium.

In a communication system including a data terminal having a communication function adopting a code division multiple access (CDMA) system, a coding and a decoding means of the data terminal store parameters necessary for coding and decoding processes in the above means in their own process parameter buffers on the basis of utility frequency data of a designated transport format, so that they can read out and utilize the data of the stored parameters without need of re-calculating high utilization frequency parameters and thus reduce power consumption necessary for the processes.

Buffer control means which manage the updating of the above process parameters and the utilization frequency data, preferentially store the presence/absence of data of discrete control channels (DCCH) and the transport format combination indicator (TFCI) as a combination of the maximum and minimum data quantity transport formats of the discrete traffic channels (DTCH) in the process parameter buffers, while selectively storing, regarding the other TFCI, the remainders of the process parameter buffers according to the utilization frequency.

The buffer control means can update the priority order of the process parameter buffers according to transport rate limiting data or receiving sensitivity data provided from the network.

Furthermore, at any time the process parameters stored in the process parameter buffers and the utilization frequency data can be partly or fully written in a non-volatile memory, and at the next and following times of utilization, the process parameters and utilization frequency data stored in the non-volatile memory can be utilized.

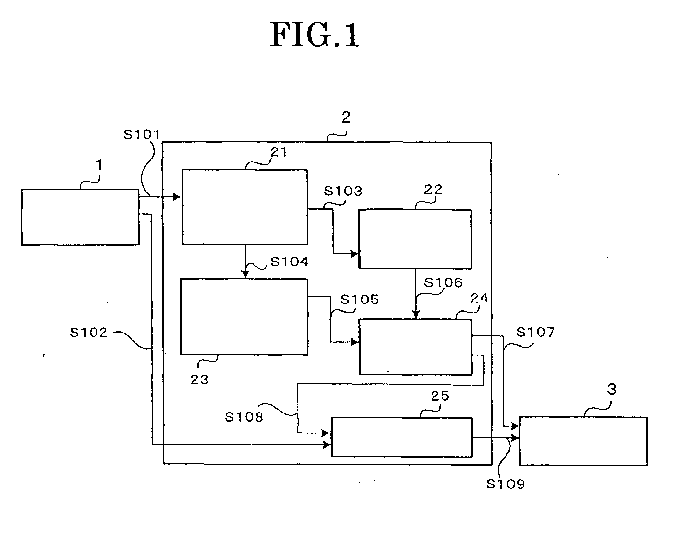

Fig. 1 shows a data communication terminal device which is a portable data terminal (i.e., transmitting side data communication terminal device) having a communication function based on the code division multiple access (CDMA) system, and has a coding means 2. The latter receives transmitted data S102 and a transmission parameter S101, and generates coded/multiplexed transmitted data S109 corresponding to the transmitted data S102 and the transmission parameter S101 and a transmitting process parameter S107 used for a transmitting process on the coded/multiplexed transmitted data S109, the generated data and parameter being fed to a pertinent transmitting means 3.

The coding means 2 includes a coding process unit 25 for obtaining the coded/multiplexed transmitted data S 109 corresponding to the transmitted data S 102 by using a supplied coding process data S108, a parameter calculation check unit 21 for performing a check, according to transport format data contained in the transmission parameter S101 preset by an upper rank controller 1 at the time of transmission, as to whether a process parameter concerning a pertinent transport format combination has already been calculated, a coding parameter process unit 23 for calculating, in response to the reception of a calculation start command S104 based on the decision by the parameter calculation check unit 21 that the process parameter has not yet been and thus still has to be calculated, a process parameter S105 including the coding process parameter and the transmission process parameter S107 according to the transmission process parameter S 107, a process parameter buffer 24 for storing the above plurality for process parameters, and a buffer control means 22 for generating a parameter table control signal S106 according to a buffer control signal S103 from the parameter calculation check unit 21 and reading out and storing pertinent process parameter with respect to the process parameter buffer 24 while updating the utilization frequency data.

The process parameter buffer 24 has areas, in which the process parameter S105 including the process parameters calculated in the coding parameter process unit 23, i.e., the coding process parameter S108 necessary in the coding process unit 25 and the transmitting process parameter S107 necessary in the transmitting unit 3, TFCI used, table use flag, parameter calculation end flag, preference rank storage flag, a plurality of tables constituted by part of or full number of table use times, and history of a plurality of times of use of past transport format combination indicators (TFCI) are stored, and is capable of being updated by the buffer control means 22.

The coding process unit 25 performs coding and multiplexing according to the preset coding process parameter S108 and transmitted data S 102, and sets the coded/multiplexed data S 109 in the transmitting means 3.

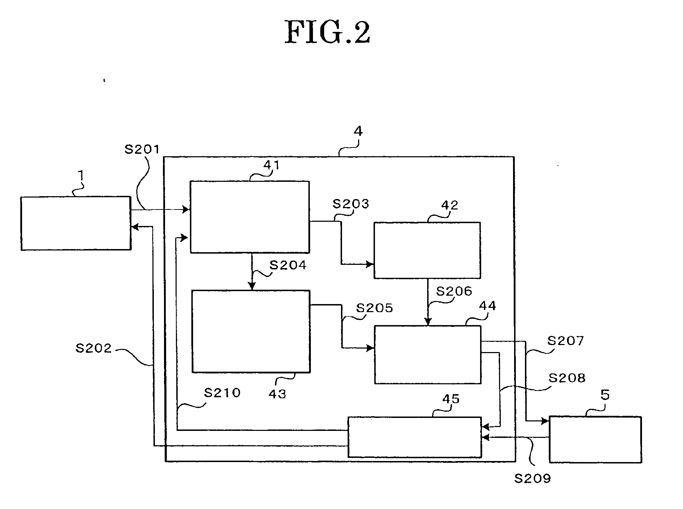

The data communication terminal unit illustrated in Fig. 2 is a portable data terminal (i.e., receiving side data communication terminal device) having a communication function based of the code division multiplex access (CDMA) system, and has a decoding means 4. The decoding means 4 receives non-decoded data S209 from a receiving unit 5, which executes process on received data by using a receiving process parameter S207, and generates decoded received data S202 by using a reception parameter S201 from an upper rank controller 1.

The decoding means 4 includes a decoding process unit 45 for decoding the non-decoded data S209 fed from the receiving means 5, which executes a process using a receiving process parameter S207, and thus obtaining decoded received data S202, a parameter calculation check unit 41 for executing a check at the time of reception, by using transport format combination indicator (TFCI) data obtained from the decoding process unit 45, as to whether a process parameter S205 in a pertinent transport format combination has been calculated, a decoding parameter process unit 43 for calculating, in response to the reception of a calculation start command S204 based on the decision by the parameter calculation check unit 41 that the process parameter has not yet been and still has to be calculated, the process parameter S205 including a decoding process parameter S208 and a receiving process parameter S207, a process parameter buffer 44 for preserving a plurality of process parameters S205, and a buffer control means 42 for reading and storing a process parameter by using a parameter table control signal S206 to the process parameter buffer 44 according to a buffer control signal from the parameter calculation check unit 41, while also updating the utilization frequency data.

The process parameter buffer 44 has areas, in which the process parameter S205 including process parameters calculated in the decoding parameter process unit 43, i.e., a decoding process parameter S208 necessary in the decoding process unit 45 and a receiving process parameter S207 necessary in the receiving means 5, used TFCI, table use flag, parameter calculation end flag, preference rank record flag, a plurality of parameter tables constituted by a part of or full number of table use times and the history of a plurality of numbers of past TFCI use are stored, and is capable of being updated by the buffer control means 42.

The decoding process unit 45 decodes prior-to-decoding data S209 fed from the receiving means 5 by using the preset decoding process parameter S208, and transfers the received data S202 to the upper rank controller 1.

The operation of the coding means of the portable data terminal (i.e., receiving side data communication terminal device) will now be described in detail with reference to Fig. 1.

At the start of a transmission channel, the upper rank controller 1 which is realized by a control program of a CPU or the like, sets the channel parameter S101 corresponding to a pertinent service in the coding process unit 25 in the coding unit 2, and also performs initial setting of the process parameter S105 in the process parameter buffer 24.

The upper rank controller 1 executes the initial setting of the process parameter S 105 in the following procedure.

In the absence of any restriction imposed on the rate of transport from the network, when the presence/absence of data of discrete (respective) control channels (DCCH) and the process parameters of a transport format combination indicator (TFCI), which is constituted by a maximum and a minimum data quantity one of the discrete traffic channel (DTCH) transport formats (DTCH), has been stored in the non-volatile memory, the upper rank unit 1 sets the pertinent TFCI, process parameter thereof, preference rank record flag and a part of or full number of times of table use in the process parameter buffer 24 in the coding means 2, and when the process parameter S105 has been set, a parameter non-calculation flag is cleared (i.e., set to "calculation end"). When no process parameter has been stored in the non-volatile memory, the upper rank unit 1 sets the TFCI in a parameter table in the process parameter buffer 24 and also sets the parameter non-calculation flag. When no table use has been stored in the non-volatile memory, the upper rank unit 1 sets an initial value as the number of times of table use.

In the case of presence of transport rate restriction data given from the network, when the presence/absence of data of discrete (respective) control channels (DCCH) and the process parameters of a transport format combination indicator (TFCI), which is constituted by a maximum and a minimum data quantity within the transfer rate restriction one of the discrete traffic channel (DTCH) transport formats (DTCH), has been stored in the non-volatile memory, the upper rank unit 1 sets the pertinent TFCI, process parameter thereof, preference rank record flag and a part of or full number of times of table use in the process parameter buffer 24 in the coding means 2, and when the process parameter S105 has been set, a parameter non-calculation flag is cleared (i.e., set to "calculation end").

When no process parameter has been stored in the non-volatile memory, the upper rank unit 1 sets the TFCI in a parameter table in the process parameter buffer 24 and also sets the parameter non-calculation flag and the preference rank record flag. When no table use has been stored in the non-volatile memory, the upper rank unit 1 sets an initial value as the number of times of table use.

However, in the case of absence of DCCH data of the above TFCI and also absence of transmission data in the minimum DTCH data quantity TFCI, in which case no coding process is necessary, the upper rank unit 1 does not set any initial value concerning the TFCI.

When a vacant area is present in a parameter table in the process parameter buffer 24 after completion of the initial value setting in the parameter table in the process parameter buffer 24, a table non-use flag is set in that vacant parameter table.

The parameter table of the process parameter buffer 24, in which the preference rank record flag has been set, can be updated only by the upper rank controller 1 and cannot be updated in the coding means 2. The parameter tables, in which no preference rank record flag has been set, can be updated by the buffer control means 22 in the coding means 2.

After completion of the setting in the individual parameter tables, the TFCI use history in the process parameter buffer 24 is cleared.

The operation of the coding means 2 in case the reception data and the transport format have been set, will be described next.

When the parameter calculation check unit 21 receives preset transport format data (i.e., transmission parameter) S101, it performs a check, by using the buffer control means 22 and also with reference to TFCI data and parameter calculation flag stored in the parameter tables in the process parameter buffer 24, as to whether the process parameter S105 of the pertinent TFCI has been calculated.

When the process parameter S105 has not been calculated, the parameter calculation check unit 21 issues a process start command S104 representing the decision that the process parameter has not been and has to be calculated. Receiving this command, the coding parameter process unit 23 calculates the process parameter S105 including the coding process parameter S108 and the transmitting process parameter S107, and sets the calculated process parameter S105 in the coding process unit 25 and the transmitting means 3, while the buffer control means 22 updates the parameter tables in the process parameter buffer 24 according to an algorithm to be described later.

When the process parameter S105 of the pertinent TFCI has been calculated, the buffer control means 22 sets the process parameter S105, which has been stored in the parameter table of the pertinent TFCI in the process parameter buffer 24, to the coding process unit 25 and transmission means 3 and updates the parameter table according to the algorithm to be described later.

The buffer control means 22 operates with the following algorithm.

If the coding parameter process unit 23 has calculated the process parameter S105, the buffer control means 22 sets the calculated process parameter S 105 in the coding calculation unit 25 and the transmission means 3; and
(1) when the TFCI of the calculated process parameter S105 corresponds to the parameter table in the process parameter buffer 24, in which the preference rank record flag has been set, the buffer control means 22 clears the parameter non-calculation flag in the pertinent parameter table in the process parameter buffer 24 and stores the process parameter S105 in the parameter table, while updating the TFCI use history and adding the number of times of use for the parameter table;
(2) in the case of failure of correspondence of the TFCI of the calculated process parameter S 105 to the parameter table of the process parameter buffer 24, in which the preference rank record flag has been set, and also the presence of the table non-use parameter table found by retrieving each parameter table in he process parameter buffer 24, the buffer control means 22 clears the non-use flag and the parameter non-calculation flag in the pertinent tables and stores the process parameter S105 of the pertinent TFCI in the pertinent parameter tables, while updating the TFCI use history and setting the number of times of use of the pertinent parameter table to "1"; and
(3) in the case of failure of correspondence of the TFCI of the calculated process parameter S105 to the parameter table of the process parameter buffer 24, in which the preference rank record flag has been set, and also the absence of the non-use parameter table found by retrieving the table non-use flag in each parameter table in the process parameter buffer 24, regarding the TFCI stored in the parameter tables in the process parameter buffer 24, in which no preference rank record flag has been set, the buffer control means 22 selects, according to a function of f (n, m) obtained as a result of weighing either one or both of the numbers n and m of times of use of the TFCI obtained from the TFCI use history and the pertinent parameter, respectively, a parameter table, in which a parameter concerning the minimum utilization frequency TFCI has been stored and stores the TFCI in the selected parameter table and the process parameter S105, while updating the TFCI use history and the number of times of use of the pertinent parameter table.

When the process parameter S 105 is not calculated by the coding parameter process unit 23, the buffer control unit 22 reads out the process parameter S105 from the parameter table corresponding to the pertinent TFCI in the process parameter buffer 24 and sets the read-out process parameter in the coding process unit 25 and in the transmitting means 3, while updating the TFCI use history and adds the number of times of use of the pertinent parameter table.

When the upper rank controller 1 receives a transport rate restriction during the operation of the coding means 2, it sets updating data in the process parameter buffer 24 in the coding means 2 in the following procedure.

When the presence/absence data about DCCH data subsequent to the transport rate restriction and TFCI as a combination of the maximum and minimum data quantity ones of DTCH transport formats within the transport rate restriction are present in the parameter tables in the process parameter buffer 24 after the clearing of all the preference rank record flags in the parameter tables in the process parameter buffer 24 in the coding means 2, the upper rank controller 1 sets the preference rank record flag in the pertinent parameter table.

When the pertinent TFCI is present in one of the parameter tables on process parameter buffer 24, like the initial setting process, in the presence of the process parameter S105 concerning the pertinent TFCI stored in the non-volatile memory, the upper rank controller 1 sets the TFCI, process parameter S105 thereof, preference rank record flag and a part of or full number of times of table use in the process parameter buffer 24 in the coding means 2. When the process parameter S105 has been set, the upper rank controller 1 clears (i.e., sets to "calculation completion") the parameter non-calculation flag. When the process parameter S105 has not been stored in the non-volatile memory, the upper rank controller 1 sets the pertinent TFCI in the parameter table in the process parameter buffer 24 and also sets the parameter non-calculation flag.

When the number of times of table use has not been stored in the non-volatile memory, the upper rank controller 1 sets the number of times of table use to the initial value. At this time, the upper rank controller 1 does sequential setting from parameter tables, in which preference rank record flags have been set prior to the updating.

When re-calculation of the process parameter S 105 in the process parameter buffer 24 becomes necessary after physical channel parameter updating, the upper rank controller 1 does parameter non-calculating flag setting in all the parameter tables in the process parameter buffer 24.

If a digit overshoot of the number of times of table use contained in each parameter table in the process parameter buffer 24 occurs as a result of the addition of this number, the upper rank controller 1 subtracts a constant number from the number of times of table use in each parameter table. When the result of calculation is negative, the upper rank controller 1 does a process of setting zero or a process of dividing the number of times of table use in each parameter table by 2ⁿ.

When a request for reading the process parameter buffer 24 is provided from the upper rank controller 1, the buffer control means 22 transports a part or all of the parameter tables in the process parameter buffer 24.

The operation of the decoding means in the portable data terminal (i.e., receiving side data communication terminal device) will now be described in detail with reference to Fig. 2.

At the start of a reception channel, the upper rank controller 1 which is realized by a control program of a CPU or the like, sets the channel parameter S201 corresponding to a pertinent service in the decoding process unit 45 in the decoding unit 4, and also performs initial setting of the process parameter S205 in the process parameter buffer 44.

The upper rank controller 1 executes the initial setting of the process parameter S205 in the following procedure.

In the absence of any restriction imposed on the rate of transport from the network, when the presence/absence of data of discrete (respective) control channels (DCCH) and the process parameters of a transport format combination indicator (TFCI), which is constituted by a maximum and a minimum data quantity of one of the discrete traffic channel (DTCH) transport formats (DTCH), has been stored in the non-volatile memory, the upper rank unit 1 sets the pertinent TFCI, process parameter thereof, preference rank record flag and a part of or full number of times of table use in the process parameter buffer 44 in the decoding means 4, and when the process parameter S205 has been set, a parameter non-calculation flag is cleared (i.e., set to "calculation end"). When no process parameter has been stored in the non-volatile memory, the upper rank unit 1 sets the TFCI in a parameter table in the process parameter buffer 44 and also sets the parameter non-calculation flag. When no table use has been stored in the non-volatile memory, the upper rank unit 1 sets an initial value as the number of times of table use.

In the presence of transport rate restriction data given from the network, when the presence/absence of data of discrete (respective) control channels (DCCH) and the process parameters of a transport format combination indicator (TFCI), which is constituted by a maximum and a minimum data quantity within the transfer rate restriction one of the discrete traffic channel (DTCH) transport formats (DTCH), has been stored in the non-volatile memory, the upper rank unit 1 sets the pertinent TFCI, the process parameter thereof, the preference rank record flag and a part of or full number of times of table use in the process parameter buffer 44 in the decoding means 4 and when the process parameter S205 has been set, a parameter non-calculation flag is cleared (i.e., set to "calculation end").

When no process parameter has been stored in the non-volatile memory, the upper rank unit 1 sets the TFCI in a parameter table in the process parameter buffer 44 and also sets the parameter non-calculation flag and the preference rank record flag. When no number of times of table use has been stored in the non-volatile memory, the upper rank unit 1 sets an initial value as the number of times of table use.

However, in the case of absence of DCCH data of the above TFCI and also absence of transmission data in the minimum DTCH data quantity TFCI, in which case no decoding process is necessary, the upper rank unit 1 does not set any initial value concerning the TFCI.

When a vacant area is present in a parameter table in the process parameter buffer 44 after completion of the initial value setting in the parameter table in the process parameter buffer 44, a table non-use flag is set in that vacant parameter table.

The parameter table of the process parameter buffer 44, in which the preference rank record flag has been set, can be updated only by the upper rank controller 1 and cannot be updated in the decoding means 4. The parameter tables, in which no preference rank record flag has been set, can be updated by the buffer control means 42 in the decoding means 4.

After completion of the setting in the individual parameter tables, the TFCI use history in the process parameter buffer 44 is cleared.

Now, the operation of the decoding means 4 in case when received data and transport format have been set will be described.

The parameter calculation check unit 41 checks, by using TFCI data S210 obtained by decoding received data S209 obtained from the receiving means 5 in the decoding process unit 45 and also the buffer control means 42 and also with reference to TFCI data and parameter calculation flags stored in the parameter tables in the process parameter buffer 44, whether the process parameter S205 of the pertinent TFCI has been calculated.

When the process parameter S205 has not been calculated, the decoding parameter process unit 43 calculates the process parameter S205 including the decoding process parameter S208 and reception parameter S207, and sets the calculated process parameter S205 in the decoding process unit 45 and the receiving means 5, and the buffer control means 42 updates the parameter tables in the process parameter buffer 44 according to an algorithm to be described hereinunder.

When the process parameter S205 of the pertinent TFCI has been calculated, the buffer control means 42 sets the process parameter S205, which has been stored in the parameter table of the pertinent TFCI in the process parameter buffer 44, to the decoding process unit 45 and receiving means 5 and updates the parameter table according to the algorithm to be described later.

The buffer control means 42 operates with the following algorithm.

When the decoding parameter process unit 43 has calculated the process parameter S205, the buffer control means 42 sets the calculated process parameter S205 in the decoding calculation unit 45 and the receiving means 5; and
(1) when the TFCI of the calculated process parameter S205 corresponds to the parameter table in the process parameter buffer 44, in which the preference rank record flag has been set, the buffer control means 42 clears the parameter non-calculation flag in the pertinent parameter table in the process parameter buffer 44 and stores the process parameter S205 in the parameter table, while updating the TFCI use history and adding the number of times of use for the parameter table;
(2) in the case of failure of correspondence of the TFCI of the calculated process parameter S205 to the parameter table of the process parameter buffer 44, in which the preference rank record flag has been set, and also the presence of the table non-use parameter table found by retrieving each parameter table in he process parameter buffer 44, the buffer control means 42 clears the non-use flag and the parameter non-calculation flag in the pertinent tables and stores the process parameter S205 of the pertinent TFCI in the pertinent parameter tables, while updating the TFCI use history and setting the number of times of use of the pertinent parameter table to "1"; and
(3) in the case of failure of correspondence of the TFCI of the calculated process parameter S205 to the parameter table of the process parameter buffer 44, in which the preference rank record flag has been set, and also the absence of the non-use parameter table found by retrieving the table non-use flag in each parameter table in the process parameter buffer 44, regarding the TFCI stored in the parameter tables in the process parameter buffer 44, in which no preference rank record flag has been set, the buffer control means 42 selects, according to a function of g (n, m) obtained as a result of weighing either one or both of the numbers n and m of times of use of the TFCI obtained from the TFCI use history and the pertinent parameter, respectively, a parameter table, in which a parameter concerning the minimum utilization frequency TFCI has been stored and stores the TFCI in the selected parameter table and the process parameter S205, while updating the TFCI use history and the number of times of use of the pertinent parameter table.

When the process parameter S205 is not calculated by the decoding parameter process unit 43, the buffer control unit 42 reads out the process parameter S205 from the parameter table corresponding to the pertinent TFCI in the process parameter buffer 44 and sets the read-out process parameter in the decoding process unit 45 and in the receiving means 5, while updating the TFCI use history and adds the number of times of use of the pertinent parameter table.

When the upper rank controller 1 receives a transport rate restriction during the operation of the decoding means 4, it sets updating data in the process parameter buffer 44 in the decoding means 4 in the following procedure.

When the presence/absence data about DCCH data subsequent to the transport rate restriction and TFCI as a combination of the maximum and minimum data quantity ones of DTCH transport formats within the transport rate restriction are present in the parameter tables in the process parameter buffer 44 after the clearing of all the preference rank record flags in the parameter tables in the process parameter buffer 44 in the decoding means 2, the upper rank controller 1 sets the preference rank record flag in the pertinent parameter table.

When the pertinent TFCI is present in one of the parameter tables on process parameter buffer 44, like the initial setting process, in the presence of the process parameter S205 concerning the pertinent TFCI stored in the non-volatile memory, the upper rank controller 1 sets the TFCI, process parameter S205 thereof, preference rank record flag and a part of or full number of times of table use in the process parameter buffer 44 in the decoding means 4. When the process parameter S205 has been set, the upper rank controller 1 clears (i.e., sets to "calculation completion") the parameter non-calculation flag. When the process parameter S205 has not been stored in the non-volatile memory, the upper rank controller 1 sets the pertinent TFCI in the parameter table in the process parameter buffer 44 and also sets the parameter non-calculation flag.

When the number of times of table use has not been stored in the non-volatile memory, the upper rank controller 1 sets the number of times of table use to the initial value. At this time, the upper rank controller 1 does sequential setting from parameter tables, in which preference rank record flags have been set prior to the updating.

When re-calculation of the process parameter S205 in the process parameter buffer 44 becomes necessary after physical channel parameter updating, the upper rank controller 1 does parameter non-calculating flag setting in all the parameter tables in the process parameter buffer 44.

In the case of occurrence of a digit overshoot of the number of times of table use contained in each parameter table in the process parameter buffer 44 as a result of the addition of this number, the upper rank controller 1 subtracts a constant number from the number of times of table use in each parameter table. When the result of calculation is negative, the upper rank controller 1, does a process of setting zero or a process of dividing the number of times of table use in each parameter table by 2ⁿ.

When a request for reading the process parameter buffer 44 is provided from the upper rank controller 1, the buffer control means 42 transports a part or all of the parameter tables in the process parameter buffer 44.

With the above embodiment, by providing the parameter calculation check unit it is possible to store the calculated parameters in the process parameter buffer for reuse. Thus, it is possible to reduce the calculation load and hence reduce consumed power.

Also, by providing the buffer control means for updating the parameter tables in the process parameter buffer, the parameter tables can be efficiently updated from the table use history and the history of the number of times of table use. Thus, even with a low memory capacity it is possible to reduce the efforts of calculation and thus reduce consumed power.

Furthermore, when the number of TFCIs in the transmission or reception is less than the number of the parameter tables in the process parameter buffer, it is possible to reduce unnecessary power consumption by stopping power supply to memories on non-use parameter tables in the process parameter buffer.

Moreover, in the case of realizing the (coding and decoding) parameter calculation units with such hardware and electronic circuits, it is possible to reduce consumed power by stopping at least either the power supply to the parameter calculation units or the clock when the number of TFCIs in the transmission or reception is less than the number of the parameter tables in the process parameter buffer or at the instant of completion of the parameter calculation for all the TFCIs.

Yet further, by reading a part or all of the calculated parameters and history data into the upper rank controller 1 at a desired timing and preserving the same in the non-volatile memory, it is possible to set a part or all of the parameters from the non-volatile memory at the next service utilization time. Thus, it is possible to improve the accuracy of the utilization history. Also, since no parameter has to be re-calculated, it is possible to reduce consumed power.

Now, a different embodiment will be described. Therein, the power supply to the process parameter buffers 24 and 44 and the clock supply are managed in each parameter table as a unit, and when the number of TFCIs in the service used is less than the numbers of the parameter tables in the process parameter buffers 24 and 44 in the transmission and reception, at least either the power supply to the non-use parameter tables or the clock supply is stopped.

Also, where the coding and decoding parameter process units 23 and 43 are constituted by electronic circuits, the parameter calculation check units 21 and 41 are adapted to manage the power and clock supplies. In the case of the less number of TFCIs in the used service than the number of the parameter tables in the process parameter buffers 24 and 44 in the transmission and reception, when the process parameters for all the TFCIs have been calculated and stored in the process parameter buffers 24 and 44, at least either the power supply to the coding and decoding parameter process units 23 and 43 or the clock supply is stopped.

Furthermore, when the number of the TFCIs in the used service is less than the number of parameter tables in the process parameter buffers 24 and 44 in the transmission and reception, the process parameters S105 and S205 of all the TFCIs are calculated in advance by using an idle time in the calculation process and stored in the parameter tables in the process parameter buffers 24 and 44, and the power supply to the non-use parameter tables in the process parameter buffers 24 and 44 and the coding and decoding process units 23 and 43 and the clock supply are stopped.

A server for accumulating the used TFCI history and process parameters for each person is prepared, a part or all of the process parameter buffers 24 and 44 is preserved in the server at a desired timing, and the process parameters S105 and S205 are obtained and use when desired.

According to the invention, it is possible, according to the frequency of use of parameters necessary for the coding and decoding processes, to reduce the frequency, at which it becomes necessary to calculate the pertinent parameters. Thus, it is possible to provide a data communication system, a data communication terminal and a data communication method, which permit further reduction power consumption necessary for the processes, and a program pertaining to the same.

## Claims

1. A transmitting side data communication terminal device comprising a coding means (2) for generating, by receiving supplied transmitted data (S102) and a transmission parameter (S101), coded/multiplexed transmitted data (S109) corresponding to the transmitted data (S102) and the transmission parameter (S101) and a transmitting process parameter (S107) used for a transmitting process on the coded/multiplexed transmitted data (S109), wherein the coding means (2) includes:
a coding process unit (25) for obtaining the coded/multiplexed transmitted data (S109) corresponding to the transmitted data by using a supplied coding process parameter (S108), and
a coding parameter process unit (23) for calculating a process parameter (S105) including the coding process parameter (S108) and the transmitting process parameter (S107) according to the transmission parameter (S101),
**characterized in that** said coding means (2) includes:
a parameter calculation check unit (21) for checking, according to transport format data contained in the transmission parameter (S101), whether the process parameter (S105) concerning a pertinent transport format combination has been calculated,
a process parameter buffer (24) for preserving a plurality of process parameters calculated by said coding parameter process unit (23), and
a buffer control means (22) for reading out and storing a pertinent process parameter with respect to said process parameter buffer (24) according to a buffer control signal (S103) from the parameter calculation check unit (21), while updating utilisation frequency data.

2. A receiving side data communication terminal device comprising a decoding means (4) for receiving non-decoded data (S209) supplied from a receiving means (5), which executes process on the received data (S202) by using a receiving process parameter (S207), and generating decoded received data (S202) by using a supplied reception parameter (S201), wherein the decoding means (4) includes
a decoding process unit (45) for obtaining decoded received data (S202) by decoding non-decoded data (S209) supplied from the receiving means (5), which executes a process using the receiving process parameter (S207), and
a decoding parameter process unit (43) for calculating a process parameter (S205) including a decoding process parameter (S208) and the receiving process parameter (S207),
**characterized in that** the decoding means (4) includes
a parameter calculation check unit (41) for checking, at the time of the reception and by using transport format combination indicator (TFCI) data obtained from the decoding process unit (45), whether the process parameters in the pertinent transport format combination have been calculated,
a process parameter buffer (44) for preserving a plurality of process parameters calculated by said decoding parameter process unit (43), and
a buffer control means (42) for reading out and storing a pertinent process parameter with respect to said process parameter buffer (44) according to a buffer control signal (S203) from the parameter calculation check unit (41), while updating the utilization frequency data.

3. A data communication system comprising as a transmitting side data communication terminal device according to claim 1 and a receiving side data communication terminal device according to claim 2.

4. The data communication terminal device according to claims 1 or 2, wherein the process parameter buffer (24, 44) stores preference rank record flag, use history of a plurality of a plurality of times of past use of transport format combination indicator (TFCI) and one or more items of the number of times of use of each TFCI together with the pertinent process parameter.

5. The data communication terminal device according to claims 1 or 2, wherein the parameter calculation check unit (21,41) causes, when it decides that the pertinent process parameter has not yet been calculated, the coding parameter process unit (23) to calculate the process parameter and issues, when the process parameter has been calculated, an instruction to the buffer control means (22, 42) for reading out the process parameter from the process parameter buffer (24,44) and using the read-out process parameter.

6. The data communication terminal device according to claims 1 or 2, wherein the buffer control means (22, 42) adds, to the contents in the process parameter buffer (24, 44), the number of times of use of transport format combination indicator (TFCI) in a pertinent parameter table, with respect to which reading and storing are done, while updating TFCI use history.

7. The data communication terminal device according to claims 1 or 2, wherein in the reading and storing of the process parameter with respect to the process parameter buffer (24, 44), the buffer control means (22, 42) uses the area of a non-use parameter table if such non-use parameter table is present.

8. The data communication terminal device according to claims 1 or 2, wherein the buffer control means (22, 42) is constructed such that when no non-use parameter table is present in the process parameter buffer (24, 44) at the time of storing the process parameter buffer, the buffer control means (22, 42) determines a parameter table to be a superscription subject according to the result of a weighing process on at least either the use history of a plurality of times of past use of transport format combination indicator (TPCI).

9. The data communication terminal device according to claims 4 or 5, wherein when no data transport rate restriction can be externally imposed, an upper rank system controls the setting of a pertinent preference rank record flag in the process buffer parameter according to the presence/absence data about discrete control channel (DCCH) and a transport format combination indicator (TFCI) as a combination of the maximum and minimum data quantity discrete traffic channels (DTCH).

10. The data communication terminal device according to claims 4 or 5, wherein when no data transport rate restriction can be externally imposed, an upper rank system controls the setting of a pertinent preference rank record flag in the process parameter buffer according to the presence/absence data about discrete control channel (DCCH) and a transport format combination indicator (TFCI) as a combination of the maximum and minimum data quantity ones of the discrete traffic channel (DTCH) transport formats within the transport rate restriction.

11. The data communication terminal device according to claims 4 or 5, wherein process buffer parameter is capable of setting the management of the supply and stop of its own operation power and operation clock for each parameter table and also capable of stopping the supply of the operation power and/or operation clock to the non-use parameter tables.

12. The data communication terminal device according to claims 1 or 2, wherein the coding parameter calculation check unit (21) is constituted by hardware such as electronic circuits, and the supply of its own operation power and/or operation clock is stopped when the process parameters of all transport format combination indicators (TFCI) in the utilized service have been calculated and stored in the process parameter buffer (24,44).

13. The data communication terminal device according to claims 1 or 2, wherein the coding parameter calculation check unit (21) is constituted by hardware such as electronic circuits, and when the number of transport format combination indicators (TFCI) in the utilized service is less than the number of the parameter tables in the process parameter buffer (24), it calculates the process parameters with respect to all the TFCIs by making use of an idle time in the process.

14. The data communication terminal device according to claims 1 or 2, wherein the process parameter buffer (24, 44) can read out a part of full data possessed by itself at a desired timing into the upper rank controller (1) for storing the read-out data in a pertinent non-volatile memory at a desired timing.

15. The data communication terminal device according to claim 14, wherein when the same service is utilized the next time, initial data can be transported from the non-volatile memory to the process parameter buffer (24, 44).

16. The data communication terminal device according to claims 1 or 2, wherein a part or full data held in the process parameter buffer (24, 44) arc read out into the upper rank controller (1) at a desired timing for storing the read-out data in a predetermined service in the network at a desired timing.

17. The data communication terminal device according to claim 16, wherein when utilizing the same service the next time, initial data can be read-out from the service and transported to the process parameter buffer (24, 44).

18. A data communication method for a transmitting side data communication terminal device adopting a code division multiple access (CDMA) system, the method comprising the following steps:
by using a coding means (2), generating, by receiving supplied transmitted data (S102) and a transmission parameter (S101), coded/multiplexed transmitted data (S109) corresponding to the transmitted data (S102) and the transmission parameter (S101) and a transmitting process parameter (S 107) used for a transmitting process on the coded/multiplexed transmitted data (S109), thereby,
by using a coding process unit (25) comprised by the coding means (2), obtaining the coded/multiplexed transmitted data (S109) corresponding to the transmitted data by using a supplied coding process parameter (S108), and,
by using a coding parameter process unit (23) comprised by the coding means (2), calculating a process parameter (S105) including the coding process parameter (S108) and the transmitting process parameter (S107) according to the transmission parameter (S101),
**characterized in that**
the following steps arc executed using the coding means (2):
by using a parameters calculation check unit (21) comprised by the coding means (2), checking, according to transport format data contained in the transmission parameter (S101), whether the process parameter (S105) concerning a pertinent transport format combination has been calculated,
by using a process parameter buffer (24) comprised by the coding means (2), preserving a plurality of process parameters calculated by said coding parameter process unit (23), and,
by using a buffer control means (22) comprised by the coding means (2), reading out and storing a pertinent process parameter with respect to said process parameter buffer (24) according to a buffer control signal (S103) from the parameter calculation check unit (21), while updating utilization frequency data.

19. A data communication method for a receiving side data communication terminal device adopting a code division multiple access (CDMA) system, the method comprising the following steps:
by using decoding means (4), receiving non-decoded data (S209) supplied from a receiving means (5), which executes process on the received data (S202) by using a receiving process parameters (S207), and generating decoded received data (S202) by using a supplied reception parameter (S201), thereby,
by using a decoding process unit (45) comprised by the decoding means (4), obtaining decoded received data (S202) by decoding non-decoded data (S209) supplied from the receiving means (5), which executes a process using the receiving process parameter (S207), and,
by using a decoding parameter process unit (43) comprised by the decoding means (4), calculating a process parameter (S205) including a decoding process parameter (S208) and the receiving process parameter (S207),
**characterized in that**
the following steps are executed using the decoding means (4):
by using a parameter calculation check unit (41) comprised by the decoding means (4), checking, at the time of the reception and by using transport format combination indicator (TFCI) data obtained from the decoding process unit (45), whether the process parameters in the pertinent transport format combination have been calculated,
by using a process parameter buffer (44) comprised by the decoding means (4), preserving a plurality of process parameters calculated by said decoding parameter process unit (43), and,
by using a buffer control means (42) comprised by the decoding means (4), reading out and storing a pertinent process parameter with respect to said process parameter buffer (44) according to a buffer control signal (S203) from the parameter calculation check unit (41), while updating the utilization frequency data.

20. A data communication method for a communication system comprising the steps of the method for a transmitting side data communication terminal device according to claim 18 and the steps of the data communication method for a receiving side data communication terminal device according to claim 19.

21. The data communication method according to claims 18 or 19, wherein the updating of the parameter data stored in the process parameter buffer (24, 44) and the utilization frequency data are managed, and the presence/absence data of discrete control channel (DCCH) data and the transport format combination indicator (TFCT) as a combination of the maximum and minimum ones of discrete traffic channel (DTCH) transport formats are preferentially stored in the process parameter buffer (24, 44), while regarding the other TFCIs the remainder of the pertinent parameters are selectively stored according to the utilization frequency data thereof.

22. The data communication method according to claims 18 or 19, wherein the preference rank of the parameter to be applied is updated according to the transport rate control data or the receiving sensitivity data given from the network.

23. The data communication method according to claims 18 or 19, wherein at a desired timing a part or all of the process parameter and utilization frequency data stored in the process parameter buffer (24, 44) are written in applied non-volatile memories, and at the next and following times of utilization the process parameters and utilization frequency data stored in the non-volatile memory arc used.

24. A program for performing a data communication method in a communication system according to any one of claims 18 to 20.

## Patentansprüche

1. Sendeseitiges Datenkommunikationsendgerät, umfassend ein Kodiermittel (2), um durch Empfangen von zugeführten gesendeten Daten (S 102) und eines Sendeparameters (S101) kodierte/gemultiplexte gesendete Daten (S 109) zu erzeugen, die den gesendeten Daten (S 102) und einem Sendeprozessparameter (S 107) entsprechen, die für einen Sendeprozess an den kodierten/gemultiplexten gesendeten Daten (S 109) verwendet werden, wobei das Kodiermittel (2) Folgendes umfasst:
eine Kodierprozesseinheit (25) zum Erhalten der kodierten/gemultiplexten gesendeten Daten (S109), die den gesendeten Daten entsprechen, durch Verwendung eines zugeführten Kodierprozessparameters (S 108) und
eine Kodierparameterprozesseinheit (23) zum Berechnen eines Prozessparameters (S105) einschließlich des Kodierprozessparameters (S 108) und des Sendeprozessparameters (S 107) gemäß dem Sendeparameter (S101),
**dadurch gekennzeichnet, dass** das Kodiermittel (2) Folgendes umfasst:
eine Parameterberechnungsprüfeinheit (21) zum Prüfen gemäß in dem Sendeparameter (S101) enthaltenen Transportformatdaten, ob der Prozessparameter (S105), der eine entsprechende Transportformatkombination betrifft, berechnet wurde,
einen Prozessparameterpuffer (24) zum Konservieren einer Mehrzahl Prozessparameter, die von der Kodierparameterprozesseinheit (23) berechnet werden, und
ein Puffersteuermittel (22) zum Auslesen und Speichern eines entsprechenden Prozessparameters bezogen auf den Prozessparameterpuffer (24) gemäß einem Puffersteuersignal (S103) aus der Parameterberechnungsprüfeinheit (21), während Nutzungsfrequenzdaten aktualisiert werden.

2. Empfangsseitiges Datenkommunikationsendgerät, umfassend ein Dekodiermittel (4), um nicht-dekodierte Daten (S209) zu empfangen, die von einem Empfangsmittel (5) zugeführt werden, das an den empfangenen Daten (S202) einen Prozess durchführt, indem ein Empfangsprozessparameter (S207) verwendet wird, und um dekodierte empfangene Daten (S202) zu erzeugen, indem ein zugeführter Empfangsparameter (S201) verwendet wird, wobei das Dekodiermittel (4) Folgendes umfasst:
eine Dekodierprozesseinheit (45) zum Erhalten von dekodierten empfangenen Daten (S202) durch Dekodieren von nicht-dekodierten Daten (S209), die von dem Empfangsmittel (5) zugeführt werden, das unter Verwendung des Empfangsprozessparameters (S207) einen Prozess ausführt, und
eine Dekodierparameterprozesseinheit (43) zum Berechnen eines Prozessparameters (S205) einschließlich eines Dekodierprozessparameters (S208) und des Empfangsprozessarameters (S207),
**dadurch gekennzeichnet, dass** das Dekodiermittel (4) umfasst:
eine Parameterberechnungsprüfeinheit (41), um zur Zeit des Empfangs und durch Verwenden von Transportformatkombinationsindikator(TFCI)-Daten, die von der Dekodierprozesseinheit (45) erhalten werden, zu prüfen, ob die Prozessparameter in der entsprechenden Transportformatkombination berechnet wurden,
einen Prozessparameterpuffer (44) zum Konservieren einer Mehrzahl Prozessparameter, die von der Dekodierparameterprozesseinheit (43) berechnet werden, und
ein Puffersteuermittel (42) zum Auslesen und Speichern eines entsprechenden Prozessparameters bezogen auf den Prozessparameterpuffer (44) gemäß einem Puffersteuersignal (S203) aus der Parameterberechnungsprüfeinheit (41), während Nutzungsfrequenzdaten aktualisiert werden.

3. Datenkommunikationssystem umfassend ein sendeseitiges Datenkommunikationsendgerät nach Anspruch 1 und ein empfangsseitiges Datenkommunikationsendgerät nach Anspruch 2.

4. Datenkommunikationsendgerät nach Anspruch 1 oder 2, wobei der Prozessparameterpuffer (24, 44) einen Präferenzrangerfassungsmerker, eine Benutzungshistorie einer Mehrzahl aus einer Mehrzahl von Malen von vergangener Benutzung des Transportformatkombinationsindikators (TFCI) und ein oder mehrere Elemente der Anzahl von Malen der Benutzung jedes TFCI zusammen mit dem entsprechenden Prozessparameter speichert.

5. Datenkommunikationsendgerät nach Anspruch 1 oder 2, wobei die Parameterberechnungsprüfeinheit (21), wenn sie entscheidet, dass der entsprechende Prozessparameter bisher noch nicht berechnet wurde, bewirkt, dass die Kodierparameterprozesseinheit (23) den Prozessparameter berechnet und, wenn der Prozessparameter berechnet wurde, eine Anweisung an das Puffersteuermittel (22, 42) ausgibt, den Prozessparameter aus dem Prozessparameterpuffer (24, 44) auszulesen und den ausgelesenen Prozessparameter zu verwenden.

6. Datenkommunikationsendgerät nach Anspruch 1 oder 2, wobei das Puffersteuermittel (22, 42) zu den Inhalten in dem Prozessparameterpuffer (24, 44) die Anzahl von Malen der Benutzung des Transportformatkombinationsindikators (TFCI) in einer entsprechenden Parametertabelle addiert, wobei das Lesen und Speichern durch Bezugnahme auf diese erfolgt, während die TFCI-Benutzungshistorie aktualisiert wird.

7. Datenkommunikationsendgerät nach Anspruch 1 oder 2, wobei beim Lesen und Speichern des Prozessparameters bezogen auf den Prozessparameterpuffer (24, 44) das Puffersteuermittel (22, 42) den Bereich einer Nichtbenutzungsparametertabelle benutzt, wenn eine solche Nichtbenutzungsparametertabelle vorhanden ist.

8. Datenkommunikationsendgerät nach Anspruch 1 oder 2, wobei das Puffersteuermittel (22, 42) so gestaltet ist, dass, wenn in dem Prozessparameterpuffer (24, 44) zur Zeit des Speicherns des Prozessparameterpuffers keine Nichtbenutzungsparametertabelle vorhanden ist, das Puffersteuermittel (22, 42) eine Parametertabelle dazu bestimmt, gemäß dem Ergebnis eines Bewertungsprozesses an mindestens einer Benutzungshistorie einer Mehrzahl von Malen von vergangener Benutzung des Transportformatkombinationsindikators (TFCI) ein Superskriptionsgegenstand zu sein.

9. Datenkommunikationsendgerät nach Anspruch 4 oder 5, wobei, wenn von außen keine Datentransportratenbeschränkung auferlegt werden kann, ein Oberrangsystem das Einstellen eines entsprechenden Präferenzrangerfassungsmerkers in dem Prozesspufferparameter gemäß den Vorhandenseins-/Nichtvorhandenseinsdaten über einen diskreten Steuerkanal (DCCH) und einem Transportformatkombinationsindikator (TFCI) als eine Kombination der Maximal- und Minimaldatenmengen-Diskretverkehrkanäle (DTCH) steuert.

10. Datenkommunikationsendgerät nach Anspruch 4 oder 5, wobei, wenn von außen keine Datentransportratenbeschränkung auferlegt werden kann, ein Oberrangsystem das Einstellen eines entsprechenden Präferenzrangerfassungsmerkers in dem Prozesspufferparameter gemäß den Vorhandenseins-/Nichtvorhandenseinsdaten über einen diskreten Steuerkanal (DCCH) und einem Transportformatkombinationsindikator (TFCI) als eine Kombination der Maximal- und Minimaldatenmengen der Diskretverkehrkanal(DTCH)-Transportformate innerhalb der Transportratenbeschränkung steuert.

11. Datenkommunikationsendgerät nach Anspruch 4 oder 5, wobei der Prozesspufferparameter in der Lage ist, die Verwaltung der Zufuhr und des Anhaltens seiner eigenen Betriebsleistung und seines eigenen Betriebstakts für jede Parametertabelle einzustellen und auch in der Lage ist, die Zufuhr der Betriebsleistung und/oder des Betriebstakts an die Nichtbenutzungsparametertabellen anzuhalten.

12. Datenkommunikationsendgerät nach Anspruch 1 oder 2, wobei die Kodierparameterberechnungsprüfeinheit (21) aus Hardware wie z.B. elektronischen Schaltungen aufgebaut ist und die Zufuhr ihrer eigenen Betriebsleistung und/oder ihres eigenen Betriebstakts angehalten wird, wenn die Prozessparameter aller Transportformatkombinationsindikatoren (TFCI) in dem benutzten Dienst berechnet und in dem Prozessparameterpuffer (24, 44) gespeichert wurden.

13. Datenkommunikationsendgerät nach Anspruch 1 oder 2, wobei die Kodierparameterberechnungsprüfeinheit (21) aus Hardware wie z.B. elektronischen Schaltungen aufgebaut ist und, wenn die Zahl der Transportformatkombinationsindikatoren (TFCI) in dem benutzten Dienst geringer als die Zahl der Parametertabellen in dem Prozessparameterpuffer (24, 44) ist, die Prozessparameter bezogen auf alle TFCIs berechnet, indem eine Leerlaufzeit in dem Prozess genutzt wird.

14. Datenkommunikationsendgerät nach Anspruch 1 oder 2, wobei der Prozessparameterpuffer (24, 44) zu einer gewünschten Zeit einen Teil von vollständigen Daten, die von ihm selbst gehalten werden, in die Oberrangsteuerung (1) auslesen kann, um die ausgelesenen Daten zu einer gewünschten Zeit in einem entsprechenden nichtflüchtigen Speicher zu speichern.

15. Datenkommunikationsendgerät nach Anspruch 14, wobei, wenn der gleiche Dienst das nächste Mal verwendet wird, anfängliche Daten aus dem nichtflüchtigen Speicher zu dem Prozessparameterpuffer (24, 44) transportiert werden können.

16. Datenkommunikationsendgerät nach Anspruch 1 oder 2, wobei ein Teil der oder vollständige Daten, die in dem Prozessparameterpuffer (24, 44) gehalten werden, zu einer gewünschten Zeit in die Oberrangsteuerung (1) ausgelesen werden, um die ausgelesenen Daten zu einer gewünschten Zeit in einem vorbestimmten Dienst in dem Netz zu speichern.

17. Datenkommunikationsendgerät nach Anspruch 16, wobei, wenn der gleiche Dienst das nächste Mal verwendet wird, anfängliche Daten von dem Dienst ausgelesen und zu dem Prozessparameterpuffer (24, 44) transportiert werden können.

18. Datenkommunikationsverfahren für ein sendeseitiges Datenkommunikationsendgerät, das ein Kodemultiplex-Vielfachzugriff(CDMA)-System einsetzt, wobei das Verfahren die folgenden Schritte umfasst:
durch Verwenden eines Kodiermittels (2) Erzeugen, durch Empfangen von zugeführten gesendeten Daten (S102) und eines Sendeparameters (S101), von kodierten/gemultiplexten gesendeten Daten (S 109), die den gesendeten Daten (S102) und dem Sendeparameter (S101) entsprechen, und eines Sendeprozessparameters (S107), der für einen Sendeprozess der kodierten/gemultiplexten gesendeten Daten (S 109) verwendet wird, wodurch
durch Verwenden einer Kodierprozesseinheit (25), die von dem Kodiermittel (2) umfasst ist, die kodierten/gemultiplexten gesendeten Daten (S 109), die den gesendeten Daten entsprechen, erhalten werden, indem ein zugeführter Kodierprozessparameter (S 108) verwendet wird, und
durch Verwenden einer Kodierparameterprozesseinheit (23), die von dem Kodiermittel (2) umfasst ist, ein Prozessparameter (S 105) einschließlich des Kodierprozessparameters (S 108) und des Sendeprozessparameters (S 107) gemäß dem Sendeparameter (S101) berechnet wird,
**dadurch gekennzeichnet, dass**
die folgenden Schritte unter Verwendung des Kodiermittels (2) ausgeführt werden:
durch Verwendung einer Parameterberechnungsprüfeinheit (21), die von dem Kodiermittel (2) umfasst ist, Prüfen gemäß Transportformatdaten, die in dem Sendeparameter (S101) enthalten sind, ob der Prozessparameter (S 105) betreffend eine entsprechende Transportformatkombination berechnet wurde,
durch Verwendung eines Prozessparameterpuffers (24), der von dem Kodiermittel (2) umfasst ist, Konservieren einer Mehrzahl Prozessparameter, die von der Kodierparameterprozesseinheit (23) berechnet werden, und
durch Verwendung eines Puffersteuermittels (22), das von dem Kodiermittel (2) umfasst ist, Auslesen und Speichern eines entsprechenden Prozessparameters bezogen auf den Prozessparameterpuffer (24) gemäß einem Puffersteuersignal (S 103) von der Parameterberechnungsprüfeinheit (21), während Nutzungsfrequenzdaten aktualisiert werden.

19. Datenkommunikationsverfahren für ein empfangsseitiges Datenkommunikationsendgerät, das ein Kodemultiplex-Vielfachzugriff(CDMA)-System einsetzt, wobei das Verfahren die folgenden Schritte umfasst:
durch Verwendung eines Dekodiermittels (4) Empfangen von nicht-dekodierten Daten (S209), die von einem Empfangsmittel (5) zugeführt werden, das unter Verwendung eines Empfangsprozessparameters (S207) einen Prozess an den empfangenen Daten (S202) ausführt, und Erzeugen von dekodierten empfangenen Daten (S202) unter Verwendung eines zugeführten Empfangsparameters (S20 1), wodurch
durch Verwendung einer Dekodierprozesseinheit (45), die von dem Dekodiermittel (4) umfasst ist, durch Dekodieren nicht-dekodierter Daten (S209), die von dem Empfangsmittel (5) zugeführt werden, das unter Verwendung des Empfangsprozessparameters (S207) einen Prozess ausführt, dekodierte empfangene Daten (S202) erhalten werden und
durch Verwendung einer Dekodierparameterprozesseinheit (43), die von dem Dekodiermittel (4) umfasst ist, Berechnen eines Prozessparameters (S205) einschließlich eines Dekodierprozessparameters (S208) und des Empfangsprozessparameters (S207),
**dadurch gekennzeichnet, dass**
die folgenden Schritte unter Verwendung des Dekodiermittels (4) ausgeführt werden:
durch Verwendung einer Parameterberechnungsprüfeinheit (41), die von dem Kodiermittel (4) umfasst ist, Prüfen zur Zeit des Empfangs und unter Verwendung von Transportformatkombinationsindikator(TFCI)-Daten, die von der Dekodierprozesseinheit (45) erhalten wurden, ob die Prozessparameter in der entsprechenden Transportformatkombination berechnet wurden,
durch Verwendung eines Prozessparameterpuffers (44), der von dem Kodiermittel (4) umfasst ist, Konservieren einer Mehrzahl Prozessparameter, die von der Dekodierparameterprozesseinheit (43) berechnet werden, und
durch Verwendung eines Puffersteuermittels (42), das von dem Kodiermittel (4) umfasst ist, Auslesen und Speichern eines entsprechenden Prozessparameters bezogen auf den Prozessparameterpuffer (44) gemäß einem Puffersteuersignal (S203) von der Parameterberechnungsprüfeinheit (41), während die Nutzungsfrequenzdaten aktualisiert werden.

20. Datenkommunikationsverfahren für ein Kommunikationssystem, umfassend die Schritte des Verfahrens für ein sendeseitiges Datenkommunikationsendgerät nach Anspruch 18 und die Schritte des Datenkommunikationsverfahrens für ein empfangsseitiges Datenkommunikationsendgerät nach Anspruch 19.

21. Datenkommunikationsverfahren nach Anspruch 18 oder 19, wobei die Aktualisierung der in dem Prozessparameterpuffer (24, 44) gespeicherten Parameterdaten und die Nutzungsfrequenzdaten verwaltet werden und die Vorhandenseins-/Nichtvorhandenseinsdaten von Diskretsteuerkanal(DCCH)-Daten und des Transportformatkombinationsindikators (TFCI) als eine Kombination der maximalen und minimalen der Diskretverkehrkanal(DTCH)-Transportformate vorzugsweise in dem Prozessparameterpuffer (24, 44) gespeichert werden, während bezüglich der anderen TFC1s der Rest der entsprechenden Parameter gemäß ihren Nutzungsfrequenzdaten selektiv gespeichert wird.

22. Datenkommunikationsverfahren nach Anspruch 18 oder 19, wobei der Präferenzrang des anzuwendenden Parameters gemäß den Transportratensteuerdaten oder den Empfangsempfindlichkeitsdaten aktualisiert wird, die vom Netz geliefert werden.

23. Datenkommunikationsverfahren nach Anspruch 18 oder 19, wobei zu einer gewünschten Zeit ein Teil der oder alle Prozessparameter und Nutzungsfrequenzdaten, die in dem Prozessparameterpuffer (24, 44) gespeichert sind, in angewendeten nichtflüchtigen Speichern geschrieben werden und zur nächsten und folgenden Zeit(en) der Nutzung die Prozessparameter und Nutzungsfrequenzdaten benutzt werden, die in dem nichtflüchtigen Speicher gespeichert sind.

24. Programm zum Durchführen eines Datenkommunikationsverfahrens in einem Kommunikationssystem nach einem der Ansprüche 18 bis 20.

## Revendications

1. Dispositif terminal de communication de données côté transmission comportant un moyen de codage (2) pour générer, en recevant des données transmises délivrées (S102) et un paramètre de transmission (S101), des données transmises codées/multiplexées (S109) correspondant aux données transmises (S102) et au paramètre de transmission (S101), et un paramètre de processus de transmission (S107) utilisé pour un processus de transmission sur les données transmises codées/multiplexées (S109), dans lequel le moyen de codage (2) comporte :
une unité de processus de codage (25) pour obtenir les données transmises codées/multiplexées (S109) correspondant aux données transmises, en faisant appel à un paramètre de processus de codage délivré (S108) ; et
une unité de processus de paramètre de codage (23) pour calculer un paramètre de processus (S105) incluant le paramètre de processus de codage (S108) et le paramètre de processus de transmission (S107) selon le paramètre de transmission (S101) ;
**caractérisé en ce que** ledit moyen de codage (2) comporte :
une unité de vérification de calcul de paramètre (21) pour vérifier, selon les données de format de transport contenues dans le paramètre de transmission (S101), si le paramètre de processus (S105) connexe à une combinaison pertinente de formats de transport a été calculé ;
une mémoire tampon de paramètres de processus (24) pour conserver une pluralité de paramètres de processus calculés par ladite unité de processus de paramètre de codage (23) ; et
un moyen de commande de mémoire tampon (22) pour lire et stocker un paramètre de processus pertinent relativement à ladite mémoire tampon de paramètres de processus (24), selon un signal de commande de mémoire tampon (S103) en provenance de l'unité de vérification de calcul de paramètre (21), tout en mettant à jour les données de fréquence d'utilisation.

2. Dispositif terminal de communication de données côté réception, comportant un moyen de décodage (4) pour recevoir des données non décodées (S209) délivrées à partir d'un moyen de réception (5), lequel met en oeuvre un processus sur les données reçues (S202) en faisant appel à un paramètre de processus de réception (S207), et pour générer des données reçues décodées (S202) en faisant appel à un paramètre de réception délivré (S201), dans lequel le moyen de décodage (4) comporte :
une unité de processus de décodage (45) pour obtenir les données reçues décodées (S202) en décodant les données non décodées (S209) délivrées à partir du moyen de réception (5), lequel met en oeuvre un processus en utilisant le paramètre de processus de réception (S207) ; et
une unité de processus de paramètre de décodage (43) pour calculer un paramètre de processus (S205) comportant un paramètre de processus de décodage (S208) et le paramètre de processus de réception (S207) ;
**caractérisé en ce que** le moyen de décodage (4) comporte :
une unité de vérification de calcul de paramètre (41) pour vérifier, au moment de la réception et en faisant appel à des données d'indicateur de combinaison de formats de transport (TFCI) obtenues en provenance de l'unité de processus de décodage (45), si les paramètres de processus dans la combinaison pertinente de formats de transport ont été calculés ;
une mémoire tampon de paramètres de processus (44) pour conserver une pluralité de paramètres de processus calculés par ladite unité de processus de paramètre de décodage (43) ; et
un moyen de commande de mémoire tampon (42) pour lire et stocker un paramètre de processus pertinent relativement à ladite mémoire tampon de paramètres de processus (44) selon un signal de commande de mémoire tampon (S203) en provenance de l'unité de vérification de calcul de paramètre (41), tout en mettant à jour les données de fréquence d'utilisation.

3. Système de communication de données comportant un dispositif terminal de communication de données côté transmission selon la revendication 1 et un dispositif terminal de communication de données côté réception selon la revendication 2.

4. Dispositif terminal de communication de données selon la revendication 1 ou 2, dans lequel la mémoire tampon de paramètres de processus (24, 44) stocke un fanion d'enregistrement de rangs de préférence, un historique d'utilisation d'une pluralité d'occurrences d'utilisation antérieure d'indicateur de combinaison de formats de transport (TFCI) et un ou plusieurs éléments du nombre d'occurrences d'utilisation de chaque indicateur TFCI avec le paramètre de processus pertinent.

5. Dispositif terminal de communication de données selon la revendication 1 ou 2, dans lequel l'unité de vérification de calcul de paramètre (21, 41) amène, lorsqu'elle détermine que le paramètre de processus pertinent n'a pas encore été calculé, l'unité de processus de paramètre de codage (23) à calculer le paramètre de processus, et émet, lorsque le paramètre de processus a été calculé, une instruction au moyen de commande de mémoire tampon (22, 42) pour lire le paramètre de processus à partir de la mémoire tampon de paramètres de processus (24, 44) et pour utiliser le paramètre de processus lu.

6. Dispositif terminal de communication de données selon la revendication 1 ou 2, dans lequel le moyen de commande de mémoire tampon (22, 42) ajoute, au contenu dans la mémoire tampon de paramètres de processus (24, 44), le nombre d'occurrences d'utilisation d'indicateur de combinaison de formats de transport (TFCI) dans une table de paramètres pertinente, relativement à laquelle la lecture et le stockage sont mis en oeuvre, tout en mettant à jour l'historique d'utilisation d'indicateurs TFCI.

7. Dispositif terminal de communication de données selon la revendication 1 ou 2, dans lequel, lors de la lecture et du stockage du paramètre de processus relativement à la mémoire tampon de paramètres de processus (24, 44), le moyen de commande de mémoire tampon (22, 42) utilise une zone d'une table de paramètres à ne pas utiliser lorsqu'une telle table de paramètres à ne pas utiliser est présente.

8. Dispositif terminal de communication de données selon la revendication 1 ou 2, dans lequel le moyen de commande de mémoire tampon (22, 42) est agencé de sorte que lorsqu'aucune table de paramètres à ne pas utiliser n'est présente dans la mémoire tampon de paramètres de processus (24, 44) au moment du stockage de la mémoire tampon de paramètres de processus, le moyen de commande de mémoire tampon (22, 42) détermine une table de paramètres comme étant un objet de suscription selon le résultat du processus de pondération sur au moins l'historique d'utilisation d'une pluralité d'occurrences d'utilisation antérieure d'indicateur de combinaison de formats de transport (TFCI).

9. Dispositif terminal de communication de données selon la revendication 4 ou 5, dans lequel lorsqu'aucune restriction de débit de transport de données ne peut être imposée de manière externe, un système de rang supérieur commande la configuration d'un fanion pertinent d'enregistrement de rangs de préférence dans la mémoire tampon de paramètres de processus selon les données d'absence/présence connexes à un canal de commande discret (DCCH) et à un indicateur de combinaison de formats de transport (TFCI) sous la forme d'une combinaison des quantités de données maximales et minimales de canaux de trafic discret (DTCH).

10. Dispositif terminal de communication de données selon la revendication 4 ou 5, dans lequel lorsqu'aucune restriction de débit de transport de données ne peut être imposée de manière externe, un système de rang supérieur commande la configuration d'un fanion pertinent d'enregistrement de rangs de préférence dans la mémoire tampon de paramètres de processus selon les données d'absence/présence connexes à un canal de commande discret (DCCH) et à un indicateur de combinaison de formats de transport (TFCI) sous la forme d'une combinaison des quantités de données maximales et minimales des formats de transport de canaux de trafic discret (DTCH) dans la restriction de débit de transport.

11. Dispositif terminal de communication de données selon la revendication 4 ou 5, dans lequel la mémoire tampon de paramètres de processus est apte à configurer la gestion de la fourniture et à mettre fin à sa propre alimentation de fonctionnement et horloge de fonctionnement pour chaque table de paramètres et est également apte à mettre fin à la fourniture de l'alimentation de fonctionnement et/ou horloge de fonctionnement aux tables de paramètres à ne pas utiliser.

12. Dispositif terminal de communication de données selon la revendication 1 ou 2, dans lequel l'unité de vérification de calcul de paramètre de codage (21) est constituée par du matériel, tel que des circuits électroniques, et il est mis fin à la fourniture de sa propre alimentation de fonctionnement et/ou horloge de fonctionnement lorsque les paramètres de processus de l'ensemble des indicateurs de combinaison de formats de transport (TFCI) dans le service utilisé ont été calculés et stockés dans la mémoire tampon de paramètres de processus (24, 44).

13. Dispositif terminal de communication de données selon la revendication 1 ou 2, dans lequel l'unité de vérification de calcul de paramètre de codage (21) est constituée par du matériel, tel que des circuits électroniques, et lorsque le nombre d'indicateurs de combinaison de formats de transport (TFCI) dans le service utilisé est inférieur au nombre de tables de paramètres dans la mémoire tampon de paramètres de processus (24), elle calcule les paramètres de processus relativement à l'ensemble des indicateurs TFCI en utilisant un temps de repos dans le processus.

14. Dispositif terminal de communication de données selon la revendication 1 ou 2, dans lequel la mémoire tampon de paramètres de processus (24, 44) peut lire une partie ou la totalité des données qu'elle contient à un moment souhaité dans le contrôleur de rang supérieur (1) pour stocker les données lues dans une mémoire non volatile pertinente à un moment souhaité.

15. Dispositif terminal de communication de données selon la revendication 14, dans lequel lorsque le même service est utilisé la fois successive, les données initiales peuvent être transportées de la mémoire non volatile à la mémoire tampon de paramètres de processus (24, 44).

16. Dispositif terminal de communication de données selon la revendication 1 ou 2, dans lequel une partie ou la totalité des données conservées dans la mémoire tampon de paramètres de processus (24, 44) est lue dans le contrôleur de rang supérieur (1) à un moment souhaité pour stocker les données lues dans un service prédéterminé dans le réseau à un moment souhaité.

17. Dispositif terminal de communication de données selon la revendication 16, dans lequel lorsque le même service est utilisé la fois successive, les données initiales peuvent être lues à partir du service et transportées vers la mémoire tampon de paramètres de processus (24, 44).

18. Dispositif de communication de données pour un dispositif terminal de communication de données côté transmission adoptant un système d'accès multiple par répartition en code (CDMA), le procédé comportant les étapes ci-après consistant à :
en faisant appel à un moyen de codage (2), générer, en recevant des données transmises délivrées (S102) et un paramètre de transmission (S101), des données transmises codées/multiplexées (S109) correspondant aux données transmises (S102) et au paramètre de transmission (S101), et un paramètre de processus de transmission (S107) utilisé pour un processus de transmission sur les données transmises codées/multiplexées (S109), par conséquent ;
en faisant appel à une unité de processus de codage (25) incluse dans le moyen de codage (2), obtenir les données transmises codées/multiplexées (S109) correspondant aux données transmises en faisant appel à un paramètre de processus de codage délivré (S108), et ;
en faisant appel à une unité de processus de paramètre de codage (23) incluse dans le moyen de codage (2), calculer un paramètre de processus (S105) comportant le paramètre de processus de codage (S108) et le paramètre de processus de transmission (S107) selon le paramètre de transmission (S101) ;
**caractérisé en ce que**
les étapes ci-après sont mises en oeuvre en faisant appel au moyen de codage (2) :
en faisant appel à une unité de vérification de calcul de paramètre (21) incluse dans le moyen de codage (2), vérifier, selon les données de format de transport contenues dans le paramètre de transmission (S101), si le paramètre de processus (S105) connexe à une combinaison pertinente de formats de transport a été calculé ;
en faisant appel à une mémoire tampon de paramètres de processus (24) incluse dans le moyen de codage (2), conserver une pluralité de paramètres de processus calculés par ladite unité de processus de paramètre de codage (23), et ;
en faisant appel à un moyen de commande de mémoire tampon (22) inclus dans le moyen de codage (2), lire et stocker un paramètre de processus pertinent relativement à ladite mémoire tampon de paramètres de processus (24) selon un signal de commande de mémoire tampon (S103) en provenance de l'unité de vérification de calcul de paramètre (21), tout en mettant à jour les données de fréquence d'utilisation.

19. Dispositif de communication de données pour un dispositif terminal de communication de données côté réception adoptant un système d'accès multiple par répartition en code (CDMA), le procédé comportant les étapes ci-après consistant à :
en faisant appel à moyen de décodage (4), recevoir des données non décodées (S209) délivrées à partir d'un moyen de réception (5), lequel met en oeuvre un processus sur les données reçues (S202) en faisant appel à un paramètre de processus de réception (S207), et générer des données reçues décodées (S202) en faisant appel à un paramètre de réception délivré (S201), par conséquent ;
en faisant appel à une unité de processus de décodage (45) incluse dans le moyen de décodage (4), obtenir les données reçues décodées (S202) en décodant les données non décodées (S209) délivrées à partir du moyen de réception (5), lequel met en oeuvre un processus en utilisant le paramètre de processus de réception (S207), et ;
en faisant appel à une unité de processus de paramètre de décodage (43) incluse dans le moyen de décodage (4), calculer un paramètre de processus (S205) comportant un paramètre de processus de décodage (S208) et le paramètre de processus de réception (S207) ;
**caractérisé en ce que** :
les étapes ci-après sont mises en oeuvre en faisant appel au moyen de décodage (4) :
en faisant appel à une unité de vérification de calcul de paramètre (41) incluse dans le moyen de décodage (4), vérifier, au moment de la réception et en utilisant des données d'indicateur de combinaison de formats de transport (TFCI) obtenues en provenance de l'unité de processus de décodage (45), si les paramètres de processus dans la combinaison pertinente de formats de transport ont été calculés ;
en faisant appel à une mémoire tampon de paramètres de processus (44) incluse dans le moyen de décodage (4), conserver une pluralité de paramètres de processus calculés par ladite unité de processus de paramètre de décodage (43), et ;
en faisant appel à un moyen de commande de mémoire tampon (42) inclus dans le moyen de décodage (4), lire et stocker un paramètre de processus pertinent relativement à ladite mémoire tampon de paramètres de processus (44) selon un signal de commande de mémoire tampon (S203) en provenance de l'unité de vérification de calcul de paramètre (41), tout en mettant à jour les données de fréquence d'utilisation.

20. Dispositif de communication de données pour un système de communication comportant les étapes du procédé pour un dispositif terminal de communication de données côté transmission selon la revendication 18 et les étapes du procédé de communication de données pour un dispositif terminal de communication de données côté réception selon la revendication 19.

21. Dispositif de communication de données selon la revendication 18 ou 19, dans lequel la mise à jour des données de paramètres stockées dans la mémoire tampon de paramètres de processus (24, 44) et les données de fréquence d'utilisation sont gérées, et les données d'absence/présence de données de canal de commande discret (DCCH) et l'indicateur de combinaison de formats de transport (TFCI) sous la forme d'une combinaison des formats de transport maximaux et minimaux parmi des formats de transport de canal de trafic discret (DTCH) sont de préférence stockés dans la mémoire tampon de paramètres de processus (24, 44), alors qu'en ce qui concerne les autres indicateurs TFCI, le reste des paramètres pertinents est stocké de manière sélective selon les données de fréquence d'utilisation connexes.

22. Dispositif de communication de données selon la revendication 18 ou 19, dans lequel le rang de préférence du paramètre à appliquer est mis à jour selon les données de commande de débit de transport ou les données de sensibilité de réception transmises par le réseau.

23. Dispositif de communication de données selon la revendication 18 ou 19, dans lequel, au moment souhaité, une partie ou la totalité des paramètres de processus et des données de fréquence d'utilisation stockés dans la mémoire tampon de paramètres de processus (24, 44) est écrite dans des mémoires non volatiles appliquées, et aux occurrences d'utilisation suivantes et successives, les paramètres de processus et les données de fréquence d'utilisation stockés dans la mémoire non volatile sont utilisés.

24. Programme destiné à mettre en oeuvre un procédé de communication de données dans un système de communication selon l'une quelconque des revendications 18 à 20.
